# EUROPÄISCHE PATENTSCHRIFT

(11) **EP 2 978 995 B1**
(45) Veröffentlichungstag und Bekanntmachung des Hinweises auf die Patenterteilung: **09.05.2018**
(21) Anmeldenummer: 14713091.8
(22) Anmeldetag: 26.03.2014
(51) Int. Cl.: F16G 15/08, B66C 1/66, F16C 11/06

(54) **KUGELGELAGERTER ANSCHLAGPUNKT**
BALL-BEARING-SUPPORTED ATTACHMENT POINT
POINT DE BUTÉE MONTÉ SUR BILLE

(30) Priorität: 28.03.2013 DE 102013205723
(43) Veröffentlichungstag der Anmeldung: 03.02.2016
(73) Patentinhaber: RUD Ketten Rieger & Dietz GmbH u. Co. KG, 73432 Aalen (DE)
(72) Erfinder: HAAS, Simon, 73571 Horn (DE)
(74) Vertreter: Grünecker Patent- und Rechtsanwälte PartG mbB
(86) Internationale Anmeldenummer: PCT/EP2014/056041
(87) Internationale Veröffentlichungsnummer: WO 2014/154739

(56) Entgegenhaltungen:
- EP-A1- 0 004 830
- DE-B4- 10 164 598
- DE-C1- 10 062 971
- FR-A- 543 931
- TW-A- 200 301 219
- US-A- 2 651 533
- US-A- 5 484 220

## Beschreibung

Die Erfindung betrifft einen Anschlagpunkt, mit einem Verbindungselement, das einen Abschnitt zum Anschließen eines Anschlagmittels, eine Aufnahme für ein Befestigungsmittel und wenigstens ein Wälzlagerpaar zwischen der Aufnahme und dem Verbindungselement aufweist, wobei das Verbindungselement relativ zur Aufnahme drehbar ist, wobei die Wälzlager des Wälzlagerpaars jeweils wenigstens einen Wälzkörper aufweisen, wobei die Wälzlager des Wälzlagerpaares einen am Verbindungselement angebrachten Außenring aufweisen, und wobei die Aufnahme wenigstens eine Buchse aufweist, die einen Innenring für wenigstens ein Wälzlager des Wälzlagerpaares ausbildet, wobei der Innenring wenigstens einen kugelförmigen Wälzkörper des Wälzlagers um mehr als 90° umschließt.

Anschlagpunkte mit drehbaren Verbindungselementen sind bekannt und finden vorwiegend in der Hebetechnik Anwendung.

Ein Anschlagpunkt mit einem relativ zur Aufnahme drehbaren Verbindungselement für ein Befestigungsmittel ist aus der DE 100 13 845 C2 bekannt. Diese deutsche Patentschrift der Anmelderin beschreibt einen Anschlagpunkt mit einem Gleitlager. Das Gleitlager ist aus zwei in das Verbindungselement eingesetzten Buchsen gebildet. Dieser Anschlagpunkt bietet eine gute Tragfähigkeit, allerdings ist die Drehbarkeit, besonders bei schweren Lasten, eingeschränkt.

Die europäische Patentschrift der Anmelderin EP 1 456 560 B1 beschreibt einen als Ringschraube ausgestalteten Anschlagpunkt, dessen Drehbarkeit durch ein Paar von Wälzlagern verbessert ist. Der Anschlagpunkt bietet eine gute Drehbarkeit auch bei dem Heben von großen Lasten. Nachteilig ist es aber, dass die Anschlussöse zum Anschließen eines Anschlagmittels starr mit einem Sockel der Anschlagöse verbunden ist und sich daher nicht aus einer Achse des Befestigungsmittels herauskippen lässt. Ebenso von Nachteil ist es, dass dieser Anschlagpunkt beim Heben schwerer Lasten einen starken Verschleiß aufweist.

Ein Anschlagpunkt mit den eingangs genannten Merkmalen ist außerdem aus der DE 101 64 598 B4 bekannt. Diese Patentschrift der Anmelderin beinhaltet einen Anschlagpunkt, bei dem sich ein Wälzlagerpaar zwischen dem Verbindungselement und dem Befestigungsmittel befindet. Der Anschlagpunkt bietet eine gute Beweglichkeit und ausreichende Tragfähigkeit zum Heben von Lasten. Die bekannten Anschlagpunkte weisen allerdings einen hohen Verschleiß auf und besitzen dabei nur eine ungenügende Lebensdauer. Ebenso sind zur Montage der bekannten Anschlagpunkte viele Arbeitsschritte und Werkzeuge nötig, was die Montage unnötig verkompliziert und verteuert.

Es ist also die Aufgabe der Erfindung, einen Anschlagpunkt der oben genannten Art bereitzustellen, der eine lange Lebensdauer bei hoher Beweglichkeit und hoher Tragfestigkeit aufweist und dabei schnell und einfach zu montieren ist.

Diese Aufgabe wird für den eingangs genannten Anschlagpunkt dadurch gelöst, dass die Aufnahme zwei über eine Pressverbindung axial verbundene Buchsen aufweist, die jeweils einen Innenring aufweisen, wobei der Innenring wenigstens eines Wälzlagers eine Hinterschneidung aufweist, in der wenigstens ein Wälzkörper des Wälzlagers formschlüssig gehalten ist.

Die erfindungsgemäße Lösung bietet den Vorteil, dass die Materialien für den Außenring und das Verbindungselement unterschiedlich gewählt und bearbeitet werden können. Daher können sie jeweils für die voneinander verschiedenen Anforderungen als Teil eines Lagers und als Verbindungselement zum Anschließen eines Anschlagmittels optimiert werden.

Die Innenringe bilden vorteilhafte Gegenstücke für die Außenringe und ermöglichen wie die Außenringe eine hohe Umschließung der Wälzkörper, wodurch sie sowohl axiale als auch radiale Belastungen aufnehmen können.

Die Verwendung von jeweils für den Einsatzzweck der Einzelteile angepassten Materials verringert den Verschleiß und steigert die Lebensdauer im Vergleich zu Anschlagpunkten aus dem Stand der Technik deutlich.

Die erfindungsgemäße Lösung kann durch verschiedene, jeweils für sich vorteilhafte, beliebig miteinander kombinierbare Ausgestaltungen weiter verbessert werden. Auf diese Ausgestaltungsformen und die mit ihnen verbundenen Vorteile ist im Folgenden eingegangen.

So können die Wälzlager gemäß einer vorteilhaften Ausgestaltung jeweils wenigstens einen kugelförmigen Wälzkörper aufweisen, der vom Außenring um mehr als 90° umschlossen ist. Die weite Umschließung des wenigstens einen Wälzkörpers erlaubt eine hohe Lastaufnahme der Wälzlager, sowohl in axialer als auch in radialer Richtung.

Um einen besonders kompakten Außenring zu erhalten, ist es von Vorteil, wenn eine radiale Breite des Außenrings wenigstens eines Wälzlagers der radialen Abmessung eines am Außenring angelegten Wälzkörpers entspricht.

Gemäß einer weiteren vorteilhaften Ausgestaltung kann der Außenring wenigstens eines Wälzlagers eine Hinterschneidung aufweisen, in der wenigstens ein Wälzkörper des Wälzlagers formschlüssig gehalten ist. Durch den Hinterschnitt ist eine besonders weite Umschließung der Wälzkörper möglich. Außerdem erleichtert der Hinterschnitt die Montage des erfindungsgemäßen Anschlagpunktes, da die Wälzkörper nicht durch gesonderte Werkzeuge oder Teile bei der Montage gehalten werden müssen.

Um den Aufbau möglichst einfach zu gestalten, kann die wenigstens eine Hinterschneidung eine Laufbahn für wenigstens einen Wälzkörper bilden.

Dadurch, dass erfindungsgemäß der Innenring wenigstens eines Wälzlagers eine Hinterschneidung aufweist, in der wenigstens ein Wälzkörper des Wälzlagers formschlüssig gehalten ist, kann eine besonders einfache Montage eines erfindungsgemäßen Anschlagpunktes und eine vorteilhafte Umschließung der Wälzkörper kann dadurch erreicht werden.

Eine besonders einfache und kompakte Bauform eines Innenrings kann dadurch erreicht werden, dass die wenigstens eine Hinterschneidung eine Laufbahn für wenigstens einen Wälzkörper ausbildet.

Da die Aufnahme erfindungsgemäß zwei über eine Pressverbindung axial verbundene Buchsen aufweist, die jeweils einen Innenring aufweisen, kann eine besonders einfache und schnelle Montage sowie einen sicheren Sitz der Aufnahme in dem Verbindungselement erreicht werden, dass

Die Montage eines Anschlagpunktes kann dadurch vereinfacht werden, dass an wenigstens einer Buchse ein Außenring über wenigstens einen Wälzkörper unverlierbar gehalten ist.

Gemäß einer weiteren vorteilhaften Ausgestaltung kann die Aufnahme eine Buchse mit einem Innengewinde und einem unter Formschluss drehbar antreibbaren von außen zugänglichen Antriebsmittel aufweisen. Eine solche Ausgestaltung erlaubt es, die Aufnahme direkt auf einem Befestigungsmittel aufzuschrauben. Das Antriebsmittel kann dabei unter anderem eine Aufnahme für ein Mehrkantwerkzeug sein. So kann das Antriebsmittel zum Beispiel durch einen Sechskant gebildet sein, der durch einen passenden Schraubenschlüssel antreibbar ist.

Eine unerwünschte Drehung des Anschlagpunktes zum Beispiel durch Schwerkraft oder durch Vibrationen kann dadurch verhindert werden, dass zwischen Aufnahme und Verbindungselement ein Bremselement angeordnet ist, welches Aufnahme und Verbindungselement reibschlüssig verbindet.

Ein besonders einfacher Aufbau eines Anschlagpunktes kann dadurch erreicht werden, dass das Bremselement ein Dichtelement des Wälzlagers bildet.

Gemäß einer weiteren Ausführungsform kann die Bremswirkung des Bremselements dadurch verbessert werden, dass das Bremselement im Bereich der Pressverbindung zwischen Aufnahme und Verbindungselement angeordnet ist.

Eine besonders hohe Tragfähigkeit und vorteilhafte Lastverteilung kann dadurch erreicht werden, dass wenigstens ein Wälzlager des Wälzlagerpaares vollkugelig ist.

Die Außenringe können, in Richtung der Längsachse des Befestigungselements gesehen, zwischen den Innenringen liegen. Dadurch ergibt sich eine besonders kompakte und stabile Bauweise eines Anschlagpunktes.

Eine kompakte Ausgestaltungsform der Aufnahme kann dadurch erreicht werden, dass die Außenringe mit den Innenringen fluchten.

Um besonders hohe Traglasten aufnehmen zu können, können die Wälzlager ohne einen Käfig für die Wälzkörper ausgestaltet sein.

Um die Flexibilität des Anschlagpunktes zu verbessern, kann der Abschnitt ein unverlierbar verbundenes und schwenkbar gelagertes Anschlusselement zum Anschließen eines Anschlagmittels aufweisen. Das Anschlusselement kann insbesondere die Form eines Bügels aufweisen. Gemäß einer vorteilhaften Ausführungsform kann das Anschlusselement um eine Schwenkachse schwenkbar sein, die senkrecht zu einer Längsachse des Befestigungsmittels verläuft.

Um einen Anschlagpunkt bereitzustellen, der für unterschiedliche Anschlagmittel anpassbar ist, kann das Anschlusselement über eine lösbare Verbindung am Verbindungselement angeschlossen sein. Die lösbare Verbindung kann insbesondere als Schraubverbindung ausgestaltet sein.

Die Aufnahme für das Befestigungsmittel kann insbesondere durch einen Aufnahmeraum gebildet sein. Ferner kann die Aufnahme aus einem im Wesentlichen zylindrischen Element gebildet sein. Das Befestigungsmittel kann durch die Aufnahme geführt sein und diese durchsetzen.

Im Folgenden ist die Erfindung beispielhaft anhand verschiedener Ausführungsformen mit Bezug auf die Zeichnungen näher erläutert. Die bei den Ausführungsformen beispielhaft dargestellten Merkmalskombinationen können nach Maßgabe der obigen Ausführungen entsprechend der für einen bestimmten Anwendungsfall notwendigen Eigenschaften des erfindungsgemäßen Anschlagpunktes durch weitere Merkmale ergänzt werden. Auch können, ebenfalls nach Maßgabe der obigen Ausführungen, einzelne Merkmale bei den beschriebenen Ausführungsformen weggelassen werden, wenn es auf die Wirkung dieses Merkmals in einem konkreten Anwendungsfall nicht ankommt.

In den Zeichnungen werden für Elemente gleicher Funktion und/oder gleichen Aufbaus stets dieselben Bezugszeichen verwendet.

Es zeigen:
- Fig. 1: einen Schnitt durch eine vorteilhafte Ausführungsform;
- Fig. 2a: einen Schnitt durch eine Ausführungsform, die eine Buchse mit einem Antriebsmittel aufweist;
- Fig. 2b: eine Aufsicht auf die in Fig. 2a gezeigte Ausführungsform;
- Fig. 3: einen Schnitt durch eine Ausführungsform mit zentrisch gelagertem Anschlusselement;
- Fig. 4: einen Schnitt durch eine Ausführungsform mit einem Bremselement im Bereich der Pressverbindung;
- Fig. 5: einen Schnitt durch eine Ausführungsform ohne Bremselement; und
- Fig. 6: einen Schnitt durch eine Ausführungsform mit Innen- und Außenringen ohne Hinterschneidungen.

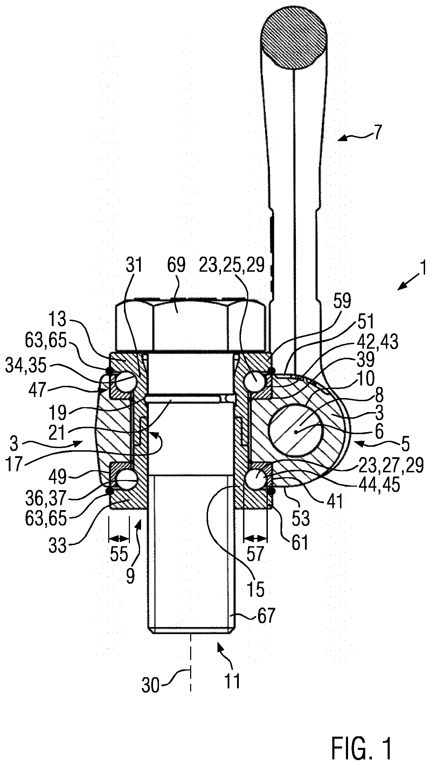

Fig. 1 zeigt eine erste vorteilhafte Ausführungsform eines erfindungsgemäßen Anschlagpunkts 1. Der Anschlagpunkt 1 weist ein Verbindungselement 3 auf. Das Verbindungselement 3 besitzt einen Abschnitt 5 zum Anschluss an ein Anschlagmittel. Der Abschnitt 5 weist ein unverlierbar verbundenes und schwenkbar gelagertes Anschlusselement 7 auf. Das Anschlusselement 7 dient zum Anschließen eines Anschlagmittels und kann bügelförmig ausgestaltet sein.

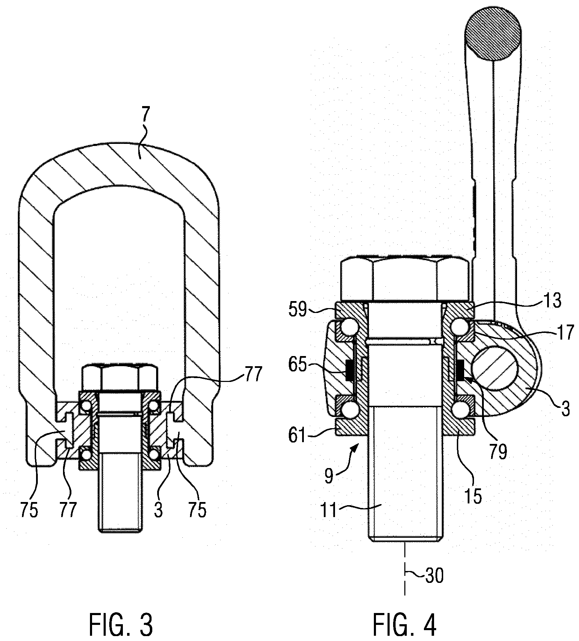

Das Anschlusselement 7 ist exzentrisch am Anschlagpunkt 1 angebracht. Eine zentrische Aufhängung eines Anschlusselements 7 ist in Fig. 3 gezeigt. Das Anschlusselement 7 ist um die Schwenkachse 6 schwenkbar, die senkrecht zu einer Längsachse 30 des Befestigungsmittels 11 verläuft.

Das Anschlusselement 7 kann durch ein entlang der Schwenkachse 6 verlaufendes Befestigungsorgan 8, z. B. einen Bolzen, welches durch eine Halteöffnung 10 im Verbindungselement 3 geführt ist, gehalten sein. Das Befestigungsorgan 8 kann durch eine Schraubverbindung am Verbindungselement gesichert sein.

Das Verbindungselement 3 ist von der Aufnahme 9 für das Befestigungsmittel 11 durchsetzt. Die Aufnahme 9 weist die Buchsen 13 und 15 auf. Die Buchsen 13 und 15 sind über eine Pressverbindung 17 miteinander verbunden. Im Inneren der Aufnahme 9 kann sich eine Nut 19 befinden. Das Befestigungsmittel 11 kann einen Federring 21 aufweisen, welcher beim Einsetzen des Befestigungsmittels 11 in die Aufnahme 9 in der Nut 19 einrastet und das Befestigungsmittel 11 unverlierbar in der Aufnahme 9 hält.

Das Verbindungselement 3 ist um die Längsachse 30 des Befestigungsmittels 11 relativ zur Aufnahme 9 drehbar.

Zwischen der Aufnahme 9 und dem Verbindungselement 3 befindet sich ein Wälzlagerpaar 23. Das Wälzlagerpaar 23 besteht aus den Wälzlagern 25 und 27. Die Wälzlager 25 und 27 des Ausführungsbeispiels weisen kugelförmige Wälzkörper 29 auf. Der erfindungsgemäße Anschlagpunkt 1 ist nicht auf die Verwendung von kugelförmigen Wälzkörpern beschränkt. Es ist ebenso eine Verwendung von Wälzkörpern mit anderen Formen, so wie Zylindern, Nadeln oder Kegeln möglich.

Die Wälzlager 25 und 27 sind kreisförmig ausgestaltet, wobei die durch die Wälzlager 25 und 27 gebildeten Kreisebenen senkrecht zur Längsachse 30 des Befestigungsmittels 11 angeordnet sind.

Die Buchsen 13 und 15 der Aufnahme 9 bilden Innenringe 31 und 33 für die Wälzlager 25 und 27 des Wälzlagerpaares 23. Die Innenringe 31 und 33 umschließen die kugelförmigen Wälzkörper 29 der Wälzlager 25 und 27 jeweils um mehr als 90°. Zur formschlüssigen Halterung der kugelförmigen Wälzkörper 29 weisen die Innenringe 31 und 33 Hinterschneidungen 42 und 44 auf.

Die Wälzlager 25 und 27 des Wälzlagerpaares 23 weisen die Außenringe 39 und 41 auf. Die Außenringe 39 und 41 sind am Verbindungselement 3 angebracht. Die Außenringe 39 und 41 umschließen die kugelförmigen Wälzkörper 29 jeweils um mehr als 90°. Die Außenringe 39 und 41 weisen jeweils eine Hinterschneidung 34 und 36 auf, in der die Wälzkörper 29 formschlüssig gehalten sind. Das Verbindungselement 3 besitzt Flachsenkungen 47 und 49 zur Aufnahme der Außenringe 39 und 41.

Die Hinterschneidungen 42 und 44 der Innenringe 31 und 33 sowie die Hinterschneidungen 34, 36 der Außenringe 39 und 41 bilden Laufbahnen 35, 37, 43 und 45 für die Wälzkörper 29.

Die Außenringe 39 und 41 schließen bevorzugt bündig mit der Oberseite 51 und der Unterseite 53 des Verbindungselements 3 ab. Die kugelförmigen Wälzkörper 29 sind so in die Außenringe 39 und 41 eingebettet, dass sie jeweils zu einem geringen Teil, welcher insbesondere nicht mehr als ein Drittel des Durchmessers der Wälzkörper 29 betragen sollte, über die Oberseite 51 und Unterseite 53 des Verbindungselements 3 hinausragen. Alternativ dazu können die Außenringe 39 und 41 so ausgestaltet sein, dass die kugelförmigen Wälzkörper 29 vollständig innerhalb des Verbindungselements 3 aufgenommen sind.

Die Außenringe 39 und 41 sind so dimensioniert, dass eine radiale Breite 55 der Außenringe 39 und 41 der radialen Abmessung 57 eines auf einem Außenring 39 und 41 aufgelegten kugelförmigen Wälzkörpers 29 entspricht.

Die Buchsen 13 und 15 bilden Ringflansche 59 und 61, zwischen denen das Wälzlagerpaar 23 und das Verbindungselement 3 sicher gehalten sind. Die Außenringe 39 und 41 sind zwischen den Ringflanschen 59 und 61 angeordnet. Die Außendurchmesser der Ringflansche 59 und 61 können den Außendurchmessern der Außenringe 39 und 41 entsprechen.

Zwischen den Buchsen 13 und 15 und den Außenringen 39 und 41 können Dichtelemente 63 zur Abdichtung der Wälzlager 25 und 27 angebracht sein. Die Dichtelemente 63 können Bremselemente 65 zur Verhinderung der Rotation der Aufnahme 9 durch Erschütterungen oder Schwerkrafteinflüsse ausbilden. Alternativ dazu können Bremselemente 65 an anderen Positionen zwischen der Aufnahme 9 und dem Verbindungselement 3 vorhanden sein.

Das Befestigungsmittel 11 weist ein Gewinde 67 und einen Schraubenkopf 69 auf, um den Anschlagpunkt 1 an einem zu hebenden Gut zu befestigen. Alternativ dazu können auch andere ausreichend tragfähige Befestigungsmittel verwendet werden. Das Befestigungsmittel 11 dient neben der Befestigung des Anschlagpunkts 1 an einem zu hebenden Gut zum Zusammenhalt der beiden miteinander verpressten Buchsen 13 und 15.

Die Wälzlager 25 und 27 sind vollkugelig ausgestaltet und weisen keine Käfige auf. Dadurch kann eine besonders hohe Traglast aufgenommen werden.

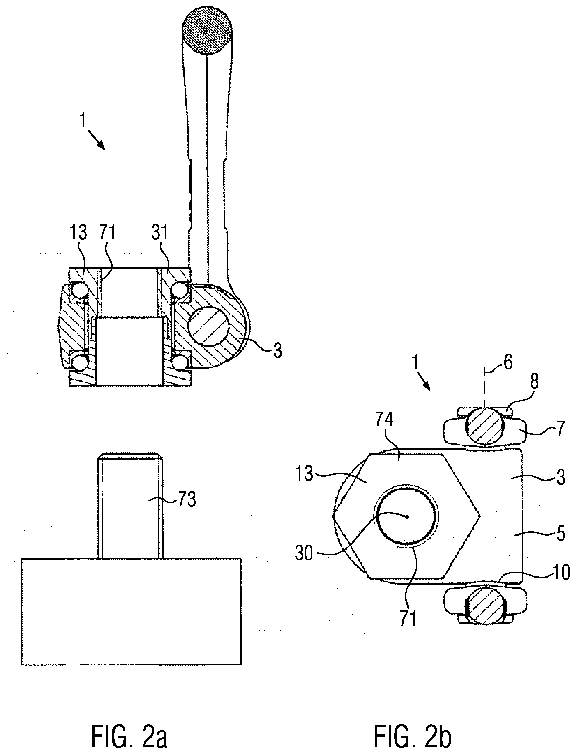

Fig. 2a zeigt einen Schnitt durch eine weitere vorteilhafte Ausführungsform eines erfindungsgemäßen Anschlagspunktes 1, bei dem die obere Buchse 13 ein Innengewinde 71 aufweist. Diese Ausführungsform kann direkt auf ein mit einem passenden Gewinde versehenes Befestigungselement wie zum Beispiel einen Gewindebolzen 73 aufgeschraubt werden.

Zur vereinfachten Montage kann der Innenring 31 der Buchse 13 als Antriebsmittel 74, zum Beispiel als Mehrkantkopf für ein entsprechendes Werkzeug wie einem Schraubenschlüssel ausgestaltet sein. So kann die Buchse 13 auf den Gewindebolzen 73 geschraubt werden, wodurch der Anschlagpunkt 1 am zu hebenden Gut befestigt wird.

Fig. 2b zeigt den in Fig. 2a dargestellten Anschlagpunkt 1 in der Aufsicht.

Die Buchse 13 weist das Antriebsmittel 74 auf. Das Antriebsmittel 74 ist in Form einer Sechskantschraube ausgestaltet, so dass es mit einem passenden Schraubenschlüssel oder anderem Werkzeug zu einer Drehung um die Längsachse 30 angetrieben werden kann. Die Buchse 13 besitzt das Innengewinde 71 zum Anschrauben auf ein Befestigungselement wie einen Gewindebolzen 73.

Das Verbindungselement 3 besitzt in diesem Ausführungsbeispiel einen exzentrisch angeordneten Bereich 5 zur Aufnahme des Anschlusselements 7. Im Bereich 5 weist das Verbindungselement 3 die durchgängige Halteöffnung 10 auf, durch die ein Befestigungsorgan 8 geführt ist. Das Befestigungsorgan 8 durchdringt das Anschlusselement 7, wodurch das Anschlusselement 7 unverlierbar und um die Schwenkachse 6 schwenkbar gehalten ist.

Fig. 3 zeigt eine Schnittdarstellung einer weiteren vorteilhaften Ausführungsform. Das Anschlusselement 7 ist zentrisch am Anschlagpunkt 1 gelagert. Beim Heben einer Last werden die Wälzlager 25 und 27 hauptsächlich in axialer Richtung belastet.

Das Verbindungselement 3 umschließt die Aufnahme 9 dabei ringförmig.

Das Anschlusselement 7 greift mit Halteorganen 75 in entsprechend ausgestaltete Aufnahmeöffnungen 77 des Verbindungselements 3 und ist darin unverlierbar und schwenkbar gehalten.

Fig. 4 zeigt eine Schnittdarstellung eines erfindungsgemäßen Anschlagpunkts 1 mit einer alternativen Ausgestaltung des Bremselements 65.

Das Verbindungselement 3 besitzt eine um die Aufnahme 9 umlaufende durchgängige Ringnut 79. In der Ringnut 79 ist das Bremselement 65 aufgenommen. Das Bremselement 65 stellt eine reibschlüssige Verbindung zwischen dem Verbindungselement 3 und der Aufnahme 9 her.

Ringnut 79 und Bremselement 65 befinden sich im Bereich der Pressverbindung 17, die die beiden Buchsen 13 und 15 miteinander verbindet. Ringnut 79 und Bremselement 65 können sich, wie Fig. 9 zeigt, entlang der Längsachse 30 des Befestigungsmittels 11 gesehen mittig zwischen den beiden Ringflanschen 59 und 61 befinden.

Alternativ zu einem durchgehenden ringförmigen Bremselement 65 kann auch wenigstens ein nicht ringförmig um die Aufnahme 9 verlaufendes Bremselement 65 zwischen der Aufnahme 9 und dem Verbindungselement 3 angeordnet sein.

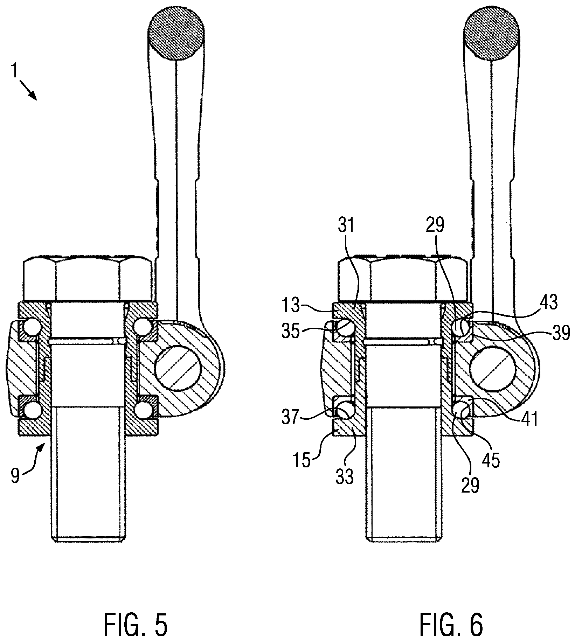

Fig. 5 zeigt eine Schnittdarstellung einer weiteren vorteilhaften Ausführungsform eines erfindungsgemäßen Anschlagpunkts 1.

Ist eine besonders hohe Beweglichkeit der drehbaren Aufnahme 9 gefordert oder ein unerwünschtes Drehen ausgeschlossen oder zu vernachlässigen, so kann ein erfindungsgemäßer Anschlagpunkt 1 ohne Bremselement 65 gebildet sein.

Fig. 6 zeigt eine weitere Ausführungsform in Schnittdarstellung eines Anschlagpunkts 1.

### Bezugszeichen

- 1: Anschlagpunkt
- 3: Verbindungselement
- 5: Abschnitt
- 6: Schwenkachse
- 7: Anschlusselement
- 8: Befestigungsorgan
- 9: Aufnahme
- 10: Halteöffnung
- 11: Befestigungsmittel
- 13, 15: Buchse
- 17: Pressverbindung
- 19: Nut
- 21: Federring
- 23: Wälzlagerpaar
- 25,27: Wälzlager
- 29: Wälzkörper
- 30: Längsachse
- 31, 33: Innenring
- 34, 36, 42, 44: Hinterschneidung
- 35, 37, 43, 45: Laufbahn
- 39, 41: Außenring
- 47,49: Flachsenkungen
- 51: Oberseite
- 53: Unterseite
- 55: Radiale Breite des Außenrings
- 57: Radiale Abmessung des Wälzkörpers
- 59, 61: Ringflansche
- 63: Dichtelement
- 65: Bremselement
- 67: Gewinde
- 69: Schraubenkopf
- 71: Innengewinde
- 73: Gewindebolzen
- 74: Antriebsmittel
- 75: Halteorgan
- 77: Aufnahmeöffnung
- 79: Ringnut

## Patentansprüche

1. Anschlagpunkt (1), mit einem Verbindungselement (3), das einen Abschnitt (5) zum Anschließen eines Anschlagmittels, eine Aufnahme (9) für ein Befestigungsmittel (11) und wenigstens ein Wälzlagerpaar (23) zwischen der Aufnahme (9) und dem Verbindungselement (3) aufweist, wobei das Verbindungselement (3) relativ zur Aufnahme (9) drehbar ist, wobei die Wälzlager (25,27) des Wälzlagerpaares jeweils wenigstens einen Wälzkörper (29) aufweisen, wobei die Wälzlager (25, 27) des Wälzlagerpaares (23) jeweils einen am Verbindungselement (3) angebrachten Außenring (39, 41) aufweisen, und wobei die Aufnahme (9) wenigstens eine Buchse (13, 15) aufweist, die einen Innenring (31, 33) für wenigstens ein Wälzlager (25, 27) des Wälzlagerpaares (23) ausbildet, wobei der Innenring (31, 33) wenigstens einen kugelförmigen Wälzkörper (29) des Wälzlagers (25, 27) um mehr als 90° umschließt, **dadurch gekennzeichnet, dass** die Aufnahme (9) zwei über eine Pressverbindung (17) axial verbundene Buchsen (13, 15) aufweist, die jeweils einen Innenring (31, 33) aufweisen, wobei der Innenring (31, 33) wenigstens eines Wälzlagers (25, 27) eine Hinterschneidung (42, 44) aufweist, in der wenigstens ein Wälzkörper (29) des Wälzlagers (25, 27) formschlüssig gehalten ist.

2. Anschlagpunkt (1) nach Anspruch 1, **dadurch gekennzeichnet, dass** die Wälzlager (25, 27) jeweils wenigstens einen kugelförmigen Wälzkörper (29) aufweisen, der vom Außenring (39, 41) um mehr als 90° umschlossen ist.

3. Anschlagpunkt (1) nach Anspruch 1 oder 2, **dadurch gekennzeichnet, dass** eine radiale Breite (55) des Außenrings (39,41) wenigstens eines Wälzlagers (25,27) der radialen Abmessung (57) eines am Außenring (39, 41) angelegten Wälzkörpers (29) entspricht.

4. Anschlagpunkt (1) nach einem der Ansprüche 1 bis 3, **dadurch gekennzeichnet, dass** der Außenring (39, 41) wenigstens eines Wälzlagers (25, 27) eine Hinterschneidung (34, 36) aufweist, in der wenigstens ein Wälzkörper (29) des Wälzlagers (25, 27) formschlüssig gehalten ist.

5. Anschlagpunkt (1) nach Anspruch 4, **dadurch gekennzeichnet, dass** die wenigstens eine Hinterschneidung (34, 36) eine Laufbahn (35,37) für wenigstens einen Wälzkörper (29) ausbildet.

6. Anschlagpunkt (1) nach einem der Ansprüche 1 bis 5, **dadurch gekennzeichnet, dass** die wenigstens eine Hinterschneidung (42, 44) eine Laufbahn (43, 45) für wenigstens einen Wälzkörper (29) ausbildet.

7. Anschlagpunkt (1) nach einem der Ansprüche 1 bis 6, **dadurch gekennzeichnet, dass** an wenigstens einer Buchse (13, 15) ein Außenring (39, 41) über wenigstens einen Wälzkörper (29) unverlierbar gehalten ist.

8. Anschlagpunkt (1) nach einem der Ansprüche 1 bis 7, **dadurch gekennzeichnet, dass** die Aufnahme (9) eine Buchse (13, 15) mit einem Innengewinde (71) und mit einem unter Formschluss drehbar antreibbaren, von außen zugänglichen Antriebsmittel aufweist.

9. Anschlagpunkt (1) nach einem der Ansprüche 1 bis 8, **dadurch gekennzeichnet, dass** zwischen Aufnahme (9) und Verbindungselement (3) ein Bremselement (65) angeordnet ist, welches Aufnahme (9) und Verbindungselement (3) reibschlüssig verbindet.

10. Anschlagpunkt (1) nach Anspruch 9, **dadurch gekennzeichnet, dass** das Bremselement (65) ein Dichtelement (63) des Wälzlagers (25, 27) bildet.

11. Anschlagpunkt (1) nach Anspruch 9, **dadurch gekennzeichnet, dass** das Bremselement (65) im Bereich der Pressverbindung (17) zwischen Aufnahme (9) und Verbindungselement (3) angeordnet ist.

12. Anschlagpunkt (1) nach einem der Ansprüche 1 bis 11, **dadurch gekennzeichnet, dass** wenigstens ein Wälzlager (25, 27) des Wälzlagerpaares (23) vollkugelig ist.

13. Anschlagpunkt (1) nach einem der Ansprüche 1 bis 12, **dadurch gekennzeichnet, dass** die Buchsen (13, 15) Ringflansche (59, 61) bilden, zwischen denen das Wälzlagerpaar (23) und das Verbindungselement (3) sicher gehalten sind.

14. Anschlagpunkt (1) nach Anspruch 13, **dadurch gekennzeichnet, dass** Außendurchmesser der Ringflansche (59, 61) Außendurchmessern der Außenringe (39, 41) entsprechen.

## Claims

1. Attachment point (1) comprising a connecting element (3) which comprises a section (5) for connecting an attachment device, a seat (9) for a fastening device (11) and at least one pair of rolling bearings (23) between said seat (9) and said connecting element (9), wherein said connecting element (3) is rotatable relative to said seat (9) wherein the rolling bearings (25, 27) of said pair of rolling bearings (23) each comprise at least one rolling element (29), wherein said rolling bearings (25, 27) of said pair of rolling bearings (23) each comprise an outer race (39, 41) attached to said connecting element (3), and wherein said seat (9) comprises at least one bushing (13, 15) which forms an inner race (31, 33) for at least one rolling bearing (25, 27) of said pair of rolling bearings (23), wherein said inner race (31, 33) encloses at least one spherical rolling element (29) of said rolling bearing (25, 27) by more than 90°, **characterized in that** said seat (9) comprises two bushings (13, 15) that are axially connected via a press-fit connection (17) and each comprise an inner race (31, 33), wherein said inner race (31, 33) of at least one rolling bearing (25, 27) comprises an undercut (42, 44) in which at least one rolling element (29) of said rolling bearing (25, 27) is supported in a positive-fit manner.

2. Attachment point (1) according to claim 1, **characterized in that** said rolling bearings (25, 27) each comprise at least one spherical rolling element (29) which is by said outer race (39, 41) enclosed by more than 90°.

3. Attachment point (1) according to claim 1 or 2, **characterized in that** a radial width (55) of said outer race (29, 41) of at least one rolling bearing (25, 27) corresponds to the radial dimension (57) of a rolling element (29) abutting said outer race (39, 41).

4. Attachment point (1) according to one of the claims 1 to 3, **characterized in that** said outer race (39, 41) of at least one rolling bearing (25, 27) comprises an undercut (34, 36) in which at least one rolling element (29) of said rolling bearing (25, 27) is supported in a positive-fit manner.

5. Attachment point (1) according to claims 4, **characterized in that** said at least one undercut (34, 36) forms a track (35, 37) for at least one rolling element (29).

6. Attachment point (1) according to any of claims 1 to 5, **characterized in that** said at least one undercut (42, 44) forms a track (43, 45) for at least one rolling element (29).

7. Attachment point (1) according to any of claims 1 to 6, **characterized in that** an outer race (39, 41) is at at least one bushing (13, 15) captively supported via at least one rolling element (29).

8. Attachment point (1) according to any of claims 1 to 7, **characterized in that** said seat (9) comprises a bushing (13, 15) with an inner thread (71) and a drive mechanism that is rotatably drivable by positive-fit engagement and accessible from the outside.

9. Attachment point (1) according to one of the claims 1 to 8, **characterized in that** a braking member (65) is disposed between said seat (9) and said connecting element (3) and connects said seat (9) and said connecting element (3) in a frictionally engaged manner.

10. Attachment point (1) according to claim 9, **characterized in that said** braking member (65) forms a sealing element (63) of said rolling bearing (25, 27).

11. Attachment point (1) according to claim 9, **characterized in that** said braking member (65) is arranged in the area of said the press-fit connection (17) between said seat (9) and said connecting element (3).

12. Attachment point (1) according to one of the claims 1 to 11, **characterized in that** at least one rolling bearing (25, 27) of said pair of rolling bearings (23) is a solid ball.

13. Attachment point (1) according to one of the claims 1 to 12, **characterized in that** the bushings (13, 15) form ring flanges (59, 61) between which the pair of rolling bearings (23) and connecting element (3) are securely supported.

14. Attachment point (1) according to claim 13, **characterized in that** the outer diameters of the ring flanges (59, 61) correspond to the outer diameters of the outer races (39, 41).

## Revendications

1. Point de butée (1) comprenant un élément de liaison (3), qui comporte un tronçon (5) destiné au raccordement d'un moyen de butée, un logement d'accueil (9) pour un moyen de fixation (11), et au moins une paire de paliers à roulement (23) entre le logement d'accueil (9) et l'élément de liaison (3), point de butée
dans lequel l'élément de liaison (3) est rotatif par rapport au logement d'accueil (9),
dans lequel les paliers à roulement (25, 27) de la paire de paliers à roulement présentent chacun respectivement au moins un corps roulant (29),
dans lequel les paliers à roulement (25, 27) de la paire de paliers à roulement (23) présentent chacun respectivement une bague extérieure (39, 41) montée sur l'élément de liaison (3), et
dans lequel le logement d'accueil (9) présente au moins une douille (13, 15), qui forme une bague intérieure (31, 33) pour au moins un palier à roulement (25, 27) de la paire de paliers à roulement (23), et
dans laquelle la bague intérieure (31, 33) entoure de plus de 90° au moins un corps roulant (29) en forme de bille du palier à roulement (25, 27),
**caractérisé en ce que** le logement d'accueil (9) comprend deux douilles (13, 15) assemblées axialement par l'intermédiaire d'une liaison à force (17) et présentant chacune une bague intérieure (31, 33), la bague intérieure (31, 33) d'au moins un palier à roulement (25, 27) présentant une contre-dépouille (42, 44) dans laquelle est maintenu par complémentarité de formes, au moins un corps roulant (29) du palier à roulement (25, 27) .

2. Point de butée (1) selon la revendication 1, **caractérisé en ce que** les paliers à roulement (25, 27) comprennent chacun au moins un corps roulant (29), qui est entouré sur plus de 90° par la bague extérieure (39, 41) .

3. Point de butée (1) selon la revendication 1 ou la revendication 2, **caractérisé en ce qu'**une largeur radiale (55) de la bague extérieure (39, 41) d'au moins un palier à roulement (25, 27), correspond à la dimension radiale (57) d'un corps roulant (29) appliqué contre la bague extérieure (39, 41).

4. Point de butée (1) selon l'une des revendications 1 à 3, **caractérisé en ce que** la bague extérieure (39, 41) d'au moins un palier à roulement (25, 27) présente une contre-dépouille (34, 36) dans laquelle est maintenu par complémentarité de formes, au moins un corps roulant (29) du palier à roulement (25, 27) .

5. Point de butée (1) selon la revendication 4, **caractérisé en ce que** ladite au moins une contre-dépouille (34, 36) forme un chemin de roulement (35, 37) pour au moins un corps roulant (29).

6. Point de butée (1) selon l'une des revendications 1 à 5, **caractérisé en ce que** ladite au moins une contre-dépouille (42, 44) forme un chemin de roulement (43, 45) pour au moins un corps roulant (29).

7. Point de butée (1) selon l'une des revendications 1 à 6, **caractérisé en ce que** sur au moins une douille (13, 15) est maintenue, de manière imperdable, une bague extérieure (39, 41), par l'intermédiaire d'au moins un corps roulant (29).

8. Point de butée (1) selon l'une des revendications 1 à 7, **caractérisé en ce que** le logement d'accueil (9) comprend une douille (13, 15) avec un filetage intérieur (71) et avec un moyen d'entraînement accessible de l'extérieur et pouvant être entraîné en rotation moyennant une liaison par complémentarité de formes.

9. Point de butée (1) selon l'une des revendications 1 à 8, **caractérisé en ce qu'**entre le logement d'accueil (9) et l'élément de liaison (3), est agencé un élément de freinage (65), qui relie par une liaison de friction, le logement d'accueil (9) et l'élément de liaison (3).

10. Point de butée (1) selon la revendication 9, **caractérisé en ce que** l'élément de freinage (65) forme un élément d'étanchéité (63) du palier à roulement (25, 27) .

11. Point de butée (1) selon la revendication 9, **caractérisé en ce que** l'élément de freinage (65) est agencé dans la zone de la liaison à force (17), entre le logement d'accueil (9) et l'élément de liaison (3).

12. Point de butée (1) selon l'une des revendications 1 à 11, **caractérisé en ce qu'**au moins un palier à roulement (25, 27) de la paire de paliers à roulement (23), est un palier à roulement entièrement à billes.

13. Point de butée (1) selon l'une des revendications 1 à 12, **caractérisé en ce que** les douilles (13, 15) forment des flasques annulaires (59, 61) entre lesquels sont maintenus de manière fiable, la paire de paliers à roulement (23) et l'élément de liaison (3).

14. Point de butée (1) selon la revendication 13, **caractérisé en ce que** des diamètres extérieurs des flasques annulaires (59, 61) correspondent à des diamètres extérieurs des bagues extérieures (39, 41).
